(19) Europäisches Patentamt
European Patent Office
Office européen des brevets

(11) **EP 3 344 814 B1**

(12) **EUROPEAN PATENT SPECIFICATION**

(45) Date of publication and mention
of the grant of the patent:
**02.08.2023 Bulletin 2023/31**

(21) Application number: **16760608.6**

(22) Date of filing: **22.08.2016**

(51) International Patent Classification (IPC):
*D21H 17/00* (2006.01)     *D21H 17/22* (2006.01)
*D21H 19/50* (2006.01)     *D21H 21/18* (2006.01)

(52) Cooperative Patent Classification (CPC):
**D21H 17/005; C12Y 203/02013; D21H 17/22;**
**D21H 19/50; D21H 21/18;** Y02E 50/10

(86) International application number:
**PCT/US2016/047945**

(87) International publication number:
**WO 2017/040077 (09.03.2017 Gazette 2017/10)**

(54) **METHOD FOR MAKING LIGNOCELLULOSIC PAPER AND PAPER PRODUCTS**

VERFAHREN ZUR HERSTELLUNG VON LIGNOCELLULOSEPAPIER UND PAPIERPRODUKTEN

PROCÉDÉ DE FABRICATION DE PAPIER LIGNOCELLULOSIQUE ET DE PRODUITS DE PAPIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2015 US 201562213663 P**

(43) Date of publication of application:
**11.07.2018 Bulletin 2018/28**

(73) Proprietor: **Solenis Technologies, L.P.
8200 Schaffhausen (CH)**

(72) Inventor: **SHEKHAWAT, Sujan Singh
King of Prussia, PA 19406 (US)**

(74) Representative: **LKGlobal UK Ltd.
Cambridge House
Henry Street
Bath BA1 1BT (GB)**

(56) References cited:
**US-A1- 2010 267 110     US-A1- 2013 146 239
US-B1- 8 858 759**

Description

## BACKGROUND OF THE INVENTION

The present invention relates to a method of making paper and paper products. More specifically the presented invention relates to the papermaking process wherein at least one enzyme alone or with at least one protein source and/or at least one nonionic, cationic, anionic or amphoteric polymer to help improve the dry strength of the paper and paper products.

There has long been a need for paper makers to make stronger sheets using less virgin fiber and especially the ability to use recycled wood fiber while maintaining desirable paper properties. Many additives including small molecule polymers and more recently enzymes have been used to impart wet and dry strength to paper products. The present invention pertains to the use of the protein cross linking enzyme Transglutaminase alone or in combination with a protein source, which was found to increase paper dry strength. The present invention provides not only for increased dry strength of a paper product, but would also allow paper makers to substitute expensive wood fiber with recycled fiber while retaining desirable paper properties.

Most enzymes that have been used in paper making and wastewater treatment are hydrolytic in nature such as cellulases, proteases, amylases, xylanases and peroxidases. The term "hydrolytic" implies that these enzymes cleave existing chemical bonds such as glycosidic, ester and amide bonds. In addition, oxidases such as laccases have also recently found use in paper making operations. However, we have recently found a different class of enzyme that helps to increase paper strength. The enzyme Transglutaminase (TG) cross links protein substrates by catalyzing an isopeptide bond formation between glutamine and lysine side chains of substrate proteins. Many plant derived proteins such as soy and animal derived proteins are substrates for Transglutaminase. In fact, Transglutaminase is a widely used enzyme in the food industry to modify bread, meat and soy based foods.

Transglutaminases (protein-glutamine: amine γ-glutamyltransferase) are a family of enzymes that catalyze the transamidation of glutamine residues in substrate protein to lysine residues. As a result of Transglutaminase action, a covalent bond is formed via an intermolecular reaction between a glutamine and lysine side chains on the same protein molecule or via an intramolecular reaction between glutamine and lysine side chains on different protein molecules. The resulting carbon-nitrogen covalent bond between the side chains of glutamine and lysine is referred to as an isopeptide bond. The reaction proceeds via acyl transfer reaction wherein the primary amine in the side chain of the amino acid lysine acts as the acyl acceptor and the glutamate side chain act as the acyl donor. A covalent bond between a lysine side chain and any other free carboxyl group on a protein is also generally referred to as an isopeptide bond. The covalent linkages formed in this manner can lead to highly cross-linked protein structures with a very high molecular weight. Transglutaminases can also accept other small low molecular weight amines as acyl donors such as putrescine, cadaverine and polyamines.

Transglutaminases are found in many different types of organisms including humans, bacteria, yeast, plants and lower vertebrates. Many of these transglutaminases are regulated by calcium and small nucleosides such as guanosine triphosphate (GTP) and are thus not easy to adapt for biotechnological applications due to the associated application complexity. However, microbial Transglutaminases are relatively calcium and nucleoside independent leading to ease of application and not surprisingly have found widespread use in numerous biotechnology areas such as food, biomaterials and medicine. Microbial transglutaminases also have broader substrate specificity and accept a wide range of substrates. Besides protein-protein conjugation, transglutaminases have been used to conjugate protein with nucleotides, protein with polymers and proteins with small molecules. Their most significant industrial application, however, has been in the food industry.

U.S. Patent No. 4,917,904, describes a process for improving the texture of protein based foods such as meat, milk and soy using Transglutaminase wherein the protein content of the food is modified by the enzyme.

U.S. Patent No. 6,472,182, disclosed a process for producing a microbial Transglutaminase by culturing various microorganisms and then isolating the Transglutaminase. Many more patents describing use of Transglutaminase to modify food products have been described in the prior art which are beyond the scope of the present invention.

Transglutaminases have been used to modify natural and synthetic biomaterials. U.S. Patent No. 6,051,033, discloses modifying wool fibers using a proteolytic enzyme such as trypsin and transglutaminase. The treated wool was shown to exhibit improved shrink resistance, wettability, improved softness, burst strength, tensile strength and dyeing characteristics.

U.S. Patent Application No. 2004/0265951, describes a method to synthesize biomimetic gels using polyethylene glycol polymer backbone modified with short amino acid sequences and transglutaminase.

U.S. Patent Application No. 2004/0266690, describes covalent and site-specific conjugate erythropoietin, a biologically active protein, to non-antigenic hydrophilic polymers, which leads to improved half-life and stability for the protein-polymer conjugates.

U.S. Patent Application No. 2002/0155524, describes a method utilizing transglutaminase to stabilizing hides and skins towards an efficient and improved tanning process. The Transglutaminase is proposed to cross link the collagen fibers in the leather or skin.

U.S. Patent Application No. US 2014/0116635 A1 describers the use of laccase enzyme in conjunction with a cationic polymer to enhance the dry strength of paper. In particular, the patent reports an increase in ring compression index and tensile strength of paper made using pulp fibers that have been treated with laccase and a cationic polymer.

US2010267110 provides laccases, polynucleotides encoding these enzymes, the methods of making and using these polynucleotides and polypeptides. US2013146239 discloses methods for reducing the effects of wetlapping, drying, and hornification of pulp fibers and consequently increasing the pulp drainage and strength properties in the final product. US8858759 discloses methods and compositions for improving dewatering efficiency during a papermaking or pulp drying process.

During the production of paper based materials such as bath tissue, paper towels, packaging containers and the like, paper manufacturers use a variety of additives to either improve existing paper properties or impart new functionalities to the paper material. These additives usually include, sizing agents, wet strength polymers, dry strength polymers, softeners, debonders and optical brighteners among others. More recently, the use of enzymes has also become prevalent in paper making and related applications. For instance, cellulases have been used both as strength additives and a drainage aids. Lipases and proteases have been used to control hydrophobic impurities and for contaminant control. Additionally, the use of xylanases to improve performance of bleaching chemicals is also widely known.

It is of note that most enzymes in use today in paper and pulp mill operations, are hydrolytic in nature. For example, cellulases and amylases cleave glycosidic bonds, proteases cleave amide bonds and lipases catalyze hydrolysis of lipids or fats. However, it is not common to employ enzymes, in paper making and related applications, that catalyze formation of glycosidic and amide bonds, such as Transglutaminase.

The use of non-enzymatic protein based additives, such as soy flour, in papermaking and related applications is also known. Notably, soy flour has been reported as a dry strength agent in academic literature (see Jin et. al. J. Ag. Food Chem., 2012, 60, 9828-9833). High molecular weight polymers such as polyacrylamides, polyvinylamines and starch have been used to increase paper strength by electrostatic interactions with wood fibers via inter fiber bridging. Soy protein is thought to interact with wood fibers via electrostatic interactions in a similar way. A protein monomer due to its low molecular weight would be less effective towards strength inducing bridging interactions between cellulose fibers. However, a cross-linked and polymerized protein molecule due to its much larger size and molecular weight could possibly interact with multiple cellulose fibers and act as a dry strength additive in paper based applications.

## SUMMARY OF THE INVENTION

The present invention relates to a method for increasing the dry strength of paper.

More particularly, the method relates to treating a papermaking pulp with a transglutaminase enzyme, and optionally a protein.

The method also relates to the treatment of the papermaking pulp wherein a protein, transglutaminase and at least one other enzyme such as, a protease, a cellulase, a laccase, a hemicellulase, a lipase, an amylase and/or an esterase is added to the papermaking pulp.

In yet another embodiment of the method, the papermaking pulp is treated with a protein source, transglutaminase enzyme and a nonionic, anionic, cationic or amphoteric polymer wherein the protein source, enzyme and the polymer can be added sequentially in any order, simultaneously or as a formulation. In addition, the components and/or formulation of the components can be added to the papermaking process in bulk or over time and addition of chemicals can be instantaneous or can be added over about a 30-minute time frame or a time frame any less than that.

## DETAILED DESCRIPTION OF THE INVENTION

The present invention relates to a method of making paper and paper products. More particularly, the method relates to making paper using a transglutaminase enzyme as an additive and optionally a protein source, low and high molecular weight natural and synthetic molecules, and/or natural and synthetic polymers to help improve dry strength of the paper or paper products.

In one aspect, the current method provides for the treatment of papermaking pulp with a transglutaminase enzyme, and optionally, a protein source, and the paper produced with the treated pulp. The applicant has surprisingly discovered that the paper produced by the current method has improved dry strength properties such as Mullen Burst and ring compression index values.

In other aspects of the current method, the transglutaminase enzymes can also be used in combination with other classes of enzymes, such as oxidoreductases [EC1], hydrolases [EC3] such as cellulases and proteases and ligases [EC6]. The enzymes can be from any source, can be wild type or mutant and can be produced recombinantly or obtained from naturally occurring sources.

In another aspect of the present method, the papermaking pulp can be treated with other enzymes, protein sources, polymers and other additives. As in the above aspects of the current method, the enzymes, protein sources, polymers and other additives can be added sequentially, simultaneously or as a mixture to the papermaking pulp.

In yet other aspects of the current method, the chemicals can be combined and added as a formulation to the papermaking pulp. Examples of compounds suitable for use with the transglutaminase enzyme and protein source include, but are not limited to, dry strength additives such as, starch and starch derivatives, polyacrylamide derivatives, naturally occurring or modified guar, poly(vinylamine); wet strength additives such as, polyethyleneimine, polyvinyl alcohols, urea formaldehyde resin, epichlorohydrin reacted poly(aminoamide), starch aldehyde, glyoxalated polyacrylamide (GPAM); flocculants; coagulants drainage aids; retention aids; sizing agents; debonders; adhesives; plasticizers; creping adhesives; and modifiers. Any of the above combinations or individual components may be applied together or sequentially in papermaking. Additionally, individual components of any of the above combinations may be blended together prior to use.

In some aspects of the current method, the protein source can be mixed or treated with the enzyme before it is added to the papermaking pulp. The protein source can also be modified with any enzyme or combination of enzymes prior to addition to the papermaking pulp. In addition, the protein can be co-treated with other enzymes to modify the proteins molecular weight or can be combined with other papermaking additives such as cationic, anionic, nonionic, amphoteric or natural polymers as listed above. The enzyme treated protein can be combined with other strength inducing agents such as other enzymes, polymers or small molecules. Additional strength inducing agents such as other enzymes, polymers or small molecules can be added during the enzyme treatment of the protein, which can take place over time, and the resulting formulation can be added to the papermaking pulp.

In another aspect of the current method, the protein source can be treated with a protein cross-linking enzyme, followed by a protein hydrolyzing enzyme, such as Alcalase® (Novozymes), Trypsin, Chymotrypsin and such. Conversely, the protein can be treated with protein hydrolyzing enzymes, such as Alcalase® (Novozymes), Trypsin and Chymotrypsin first, followed by protein cross-linking enzymes such as Transglutaminase. The enzyme treated protein source can be combined with strength inducing agents such as polymers and small molecule compounds, which can be added to the papermaking pulp prior to, simultaneously with or subsequent to the enzyme and/or protein source.

The enzymes, protein sources, polymers and other strength inducing agents can be added at any stage of papermaking process. These components can be added during pulp preparation or brought into contact with the fibers at any stock storage chest, high or low consistency chest or any other holding tank. The term pulp or papermaking pulp applies to the pulp fiber at any stage of the papermaking process and is referred to as pulp fiber, pulp furnish, pulp slurry and pulp suspension throughout the application. The transglutaminase enzyme and other components can be added to white water or can be applied in the water treatment loops in virgin or recycling paper mills.

In some aspects of the current method, the transglutaminase enzyme can be added to the pulp in any amount. The addition levels of the enzyme can range from 0.001% to 5% by weight of the dry pulp or fiber can be from 0.01% to 2.5% by weight; can be from 0.1% to 2% and may be from 0.5% to 1% by weight of dry pulp or fiber.

If the amount enzyme is based on the dry weight of the protein source, the addition levels of the enzyme can range from about 0.0001% to about 5% by weight of the dry protein; can be from about 0.001% to about 2.5% by weight; can be from about 0.01% to about 2%; and may be from about 0.5% to about 1% by weight of dry protein.

Activa RM® is a commercially available food grade formulation containing 0.5% enzyme on a dry weight basis. In the illustrative examples below the enzyme was used at a 0.5% and 1% dosage level based on weight of dry fiber on an as received product basis. Polymers and other papermaking additives can be added in any amount depending on the application under consideration. For example, a polymer additive can be added in an amount of from about 0.1 kilogram (kg) to about 10 kg per ton of the paper stock, on a dry basis of the pulp or fiber. However, depending on the type of papermaking process, other amounts can be used.

In some aspects of the present method, any transglutaminase enzyme can be used to modify the protein source and added to papermaking and related applications. The transglutaminase enzymes are believed to be capable of being used in combination with other classes of enzymes, such as oxidoreductases [EC1], hydrolases [EC3] such as cellulases and proteases and ligases [EC6]. The enzymes can be from any source, can be wild type or mutant and can be produced recombinantly or obtained from naturally occurring sources.

The examples and data presented below better illustrate the benefits of the claimed invention and are not meant to be limiting. Many other combinations of the enzymes, proteins sources and synthetic or natural polymers will be evident to those skilled in the art.

## EXAMPLES

### Example 1 - Transglutaminase Assay

Transglutaminase enzyme activity was assayed using a colorimetric method developed by Folk and Cole (Folk, J.E. and Cole, P.W.; Biochim. Biophys. Acta, 122, 244, 1966). This assay is more commonly known as the hydroxamate assay and utilizes CBZ-Glutamine- Glycine as a transglutaminase amine acceptor substrate and hydroxylamine (Product no. 159417, Sigma Aldrich) as an amine donor. Transglutaminase catalyzes the reaction between hydroxylamine and CBZ-Glutamine-Glycine to produce CBZ-Glutamyl-hydroxamate-Glycine which develops a colored complex with Fe(III) with a strong UV absorbance at 525 nanometers (nm).

The assay was performed wherein a reaction cocktail was prepared by dissolving 120 milligram (mg) of CBZ-Glu-Gly (Product no. C6154, Sigma Aldrich) to 2 milliliter (ml) of 1000 millimolar (mM) tris buffer (Product no. T-1503, Sigma Aldrich) pH 6.0, at 37°C. To this solution 5ml of a 200mM hydroxylamine with 20mM Glutathione (Product no. G-4251, Sigma Aldrich) was added and thoroughly mixed. This reaction cocktail was pH adjusted to 6.0 with 100 millimolar (mM) NaOH and diluted with deionized water to a final volume 10ml.

A 0.5% solution of the Novozymes transglutaminase sample (as received) was prepared using deionized water (TG1). Twenty milligrams of Activa TI® (Ajinomoto®) was dissolved in 200 microliters (μL) of deionized water (TG2). In two separate containers, 200μL of reaction cocktail was mixed with each of the enzyme solutions and both samples were incubated at 37°C for exactly ten minutes. To both test samples, 500μL of a 12% (v/v) trichloroacetic acid solution was added and the samples were mixed with a pipette. Finally, 500μL of 5% ferric chloride solution (w/v) was added to both solutions and mixed by pipetting. Three more samples were prepared as detailed in the table below.

**Table 1**

| Reagent | Sample Blank | Standard | Standard blank |
|---|---|---|---|
| Reaction cocktail | 200 μl | - | - |
| TG solution | 30 μl | - | - |
| Deionized water | | - | 100 μl |
| L-Glutamic acid-ϒ- Monohydroxamate (10 mM) | - | 100 μl | - |
| Trichloroacetic acid solution (12 % v/v) | 500 μl | 500 μl | 500 μl |
| 5% Ferric chloride solution(w/v) | 500 μl | 500 μl | 500 μl |

All samples were mixed well and centrifuged for five minutes and transferred to cuvettes. The absorbance of each sample was recorded at 525nm. The unit definition of the transglutaminase enzyme was calculated using following equations.

$$E_{mM} = (A_{525\,nm}\,Std. - A_{525\,nm}\,Std.\,Blank)\,(1.1)$$

$$Units/mg\ enzyme = \frac{(A_{525\,nm}\,Test\ sample - A_{525\,nm}\,Test\ Blank)\,(1.23)}{E_{mM})\,(mg\ enzyme/Reaction\ mix\ volume)\,(10)}$$

The unit definition for transglutaminase is defined as follows: One unit of enzyme will catalyze formation of 1 micromole (μmol) of L-Glutamic acid-ϒ- monohydroxamate per minute from CBZ-Glutaminylglycine and hydroxylamine at pH 6.0 at 37°C.

In general, based upon the assay described above, TG1 was found to have an activity of about 500 units per gram of material as received and TG2 had an activity of about 20 units per gram of material as received.

**Example 2**

**Table 2**

| Sample | Description of Treatment | Dosage wt % based on dry fiber weight | Dry Mullen | Ring Crush |
|---|---|---|---|---|
| Control | No Treatment | 0 | 100 | 100 |
| Transglutaminase (TG1) | 100 % TG1a | 0.20% | 114 | 103 |

(continued)

| Sample | Description of Treatment | Dosage wt % based on dry fiber weight | Dry Mullen | Ring Crush |
|---|---|---|---|---|
| Soy Flour | Prolia 290[b] | 1% | 119 | 106 |
| TG1/ Soy Flour | 100 % TG1[3]/ Prolia 290[b] | 0.2%, 1% | 126 | 105 |

Procured from Novozymes (Bagsvaerd, Denmark)
Commercial product available from Cargill
A mixture of 25 % unbleached virgin fiber and 75 % recycled fibers

Example 2, illustrates the application of an experimental transglutaminase, procured from Novozymes (Bagsvaerd, Denmark). The enzyme was added to a papermaking pulp furnish alone and in combination with soy flour (Prolia 290, Cargill). A pulp suspension of unbleached softwood kraft (UBK) and recycled fibers was prepared at 3% consistency (25:75). The pulp suspension was treated with transglutaminase alone (0.2 % dry fiber weight basis) and with soy flour (1 % dry fiber weight basis) added alone and combined with transglutaminase. The paper was made using a pilot papermaking machine located at 500 Hercules Rd., Wilmington DE. The 25 % unbleached kraft pulp and 75 % recycled fibers pulp suspension was refined to a freeness of 500ml Canadian standard freeness (CSF) using an Andritz double disk refiner. The pulp suspension had a pH 7.0 and the temperature was 50°C. The basis weight of the formed paper was 80 pounds (lbs) per 3000 square feet (sq. ft.). The flocculent PerForm®PC 8713 (Solenis LLC, Wilmington, DE) was added to the wet end of the paper machine in the amount of 0.0125% based on dry pulp. The paper thus prepared were tested for dry strength properties such as Mullen Burst (TAPPI Test Method T403) and ring compression index (TAPPI Test Method T822 om-02). As shown in Table 2, the treatment of papermaking pulp with transglutaminase and optionally a protein source showed significant improvements in both Mullen Burst and ring compression index values. It is of note that a synergistic co-treatment of pulp fiber with transglutaminase and soy flour leads to the highest improvement in Mullen Burst value as compared to paper made from untreated pulp.

Surprisingly and unexpectedly the treatment of the papermaking pulp with transglutaminase alone, without any protein source, showed significant improvement in paper strength properties, Mullen burst values (see Table 2).

**Example 3**

In Example 3, the pulp furnish described above was treated with a commercially available food grade Transglutaminase formulation (ACTIVA RM®, Ajinomoto Inc.) and soy flour. It is of note that the ACTIVA RM® formulation contains the milk protein casein in addition to the enzyme Transglutaminase. The paper was made as described in Example 1. The mixed furnish was treated with ACTIVA RM® Transglutaminase formulation alone (1% dry fiber weight basis using product as received), soy flour (1% dry fiber weight basis) alone or both components. As shown in Table 3, significant improvements were seen again in paper dry strength properties especially Mullen Burst values.

**Table 3**

| Sample | Description of Treatment | Dosage wt % based on dry fiber weight | Dry Mullen | Ring Crush |
|---|---|---|---|---|
| Control | No Treatment | 0 | 100 | 100 |
| Activa RM® (TG2) | 100 % TG2[a] | 1% | 124 | 111 |
| Soy Flour | Prolia 290[b] | 1% | 112 | 103 |
| TG2/ Soy Flour | 100 % TG1[a]/ Prolia 290[b] | 1%/1% | 133 | 109 |

Commercially available from Ajinomoto Co., Inc. (Tokyo, Japan)
Commercial product available from Cargill
A mixture of 25 unbleached virgin fiber and 75 % recycled fibers

**Example 4**

In Example 4, a 3% consistency pulp furnish was made using 100% recycled fibers and treated with a commercial transglutaminase formulation and soy flour. The recycled furnish was treated with ACTIVA RM® transglutaminase formulation alone (1 % dry fiber weight basis using product as received), and with soy flour (1 % dry fiber weight basis) either alone or combined with the transglutaminase. The paper was made using the papermaking machine as detailed in Example 1 and Example 2. As shown in Table 4, significant improvement in Mullen Burst and ring compression index values were observed when the pulp furnish was treated with transglutaminase alone and in combination with the soy flour. One would expect even better improvement in paper strength properties when using 100 % recycled fibers.

### Table 4

| Sample | Description of Treatment | Dosage wt % based on dry fiber[c] weight | Dry Mullen | Ring Crush |
|---|---|---|---|---|
| Control | No Treatment | 0 | 100 | 100 |
| Activa RM® (TG2) | 100 % TG2[a] | 1% | 132 | 107 |
| Soy Flour | Prolia 290[b] | 1% | 113 | 108 |
| TG2/ Soy Flour | 100 % TG1[a]/ Prolia 290[b] | 1 % / 1 % | 128 | 122 |

Commercially available from Ajinomoto Co., Inc. (Tokyo, Japan)
Commercial product available from Cargill (OH, USA)
100 % recycled fibers

Examples 4 through 6, demonstrate the application of transglutaminase towards enhancing paper strength using a Noble and wood handsheet maker. Examples 5 and 6, provide dose response data for transglutaminase and a protein source.

### Example 5

Example 5 uses an experimental transglutaminase, from Novozymes (Bagsvaerd, Denmark). A suspension of unbleached softwood kraft (UBK) and was prepared at 3% consistency treated with transglutaminase alone and in combination with soy isolate (PRO-FAM®, ADM). The fiber slurry was treated with transglutaminase alone (0.2 % dry fiber weight basis), soy isolate (1 % dry fiber weight basis) alone or both components. Paper handsheets were made with a target basis weight of 60 lbs. /3000sq ft. on a Noble and wood handsheet former at pH 7.0. The handsheets were wet pressed to 33% solids and dried on a drum drier at 240° F for one minute resulting in a moisture content of 3-5%.

### Table 5

| Sample | Description of Treatment | Dosage wt % based on dry fiber[c] weight | Dry Mullen | Ring Crush |
|---|---|---|---|---|
| Control | No Treatment | 0 | 100 | 100 |
| Transglutaminase (TG1) | 100 % TG1[a] | 0.2% | 107 | 100 |
| Soy Isolate | PRO-FAM[b] | 1% | 101 | 110 |
| TG1/ Soy Isolate | 100 % TG1[a]/PRO-FAM[b] | 0.2 % / 1 % | 112 | 112 |

Procured from Novozymes (Bagsvaerd, Denmark)
Commercial product available from ADM (Chicago, IL, USA)
100 % unbleached virgin fibers

As listed in Table 5, paper made using fibers that are treated with transglutaminase alone show a 7% improvement in dry Mullen Burst value compared with an untreated sheet. Surprisingly, fiber treated with soy isolate alone did not provide any improvement in dry Mullen Burst value, however compression index value was improved by 10% compared to an untreated sheet. It is of note that soy isolate has a higher percentage of protein present when compared with soy flour. Paper handsheets made using fibers treated with both transglutaminase and soy isolate showed a 12% increase in both dry Mullen Burst and ring compression index values as compared with the untreated control.

Example 6

Example 6, illustrates dose dependent improvement in paper strength when the pulp furnish is treated with transglutaminase and a protein source such as Casein. In this study the fiber slurry was treated with increasing amounts of the commercially available formulation ACTIVA RM®. Paper handsheets were prepared using untreated control pulp fibers and treated pulp fibers as described in Example 5. The handsheets were tested for Mullen Burst (TAPPI Test Method T403) and ring compression index (TAPPI Test Method T822 om-02).

Table 6 illustrates a direct relationship between increasing ACTIVA RM® and the corresponding increase in paper strength properties.

**Table 6**

| Sample | Description of Treatment | Dosage wt % based on dry fiber[b] weight | Dry Mullen | Ring Crush |
|---|---|---|---|---|
| Control | No Treatment | 0 | 100 | 100 |
| Activa RM® (TG2) | 100 % TG2[a] | 0.1% | 99 | 94 |
| Activa RM® (TG2) | 100 % TG2[a] | 0.5% | 112 | 91 |
| Activa RM® (TG2) | 100 % TG2[a] | 1.0% | 114 | 93 |
| Activa RM® (TG2) | 100 % TG2[a] | 10.0% | 123 | 106 |

Commercially available from Ajinomoto Co., Inc. (Tokyo, Japan)
100 % recycled fibers

**Example 7**

In Example 7, a pulp slurry was prepared using 100 % recycled fibers and treated with increasing amounts of transglutaminase and casein protein. As shown in Table 7, casein alone at 1 % dosage level does not provide improvement in desired paper properties. However, co-treatment with transglutaminase and casein provides improvement in dry Mullen Burst value.

**Table 7**

| Sample | Description of Treatment | Dosage wt % based on dry fiber[c] weight | Dry Mullen | Ring Crush |
|---|---|---|---|---|
| Control | No Treatment | 0 | 100 | 100 |
| TG1/ Casein | 100 % TG1[a]/100% Casein[b] | 0.001% / 0.2 | 104 | 92 |
| TG1/ Casein | 100 % TG1[a]/100% Casein[b] | 0.005% / 1 | 106 | 91 |
| TG1/ Casein | 100 % TG1[a]/100% Casein[b] | 0.01% / 2 | 111 | 104 |
| TG1/ Casein | 100 % TG1[a]/100% Casein[b] | 0.05% / 10 | 110 | 97 |
| Casein | 100 % Casein[b] | 1.0% | 100 | 100 |

Procured from Novozymes (Bagsvaerd, Denmark)
Commercial product available from Sigma Aldrich (St. Louis, MO)
100 % recycled fibers

**Example 8**

Example 8 demonstrates that similar strength benefits are obtained if a paper making fiber suspension is treated with a stable formulation composed of enzyme treated proteins, natural polymers and synthetic polymers as described above. The formulation was prepared as follows: A 10 percent suspension of 200 grams of soy flour (Prolia®290, ADM (Chicago, IL, USA) in water was stirred for 5 minutes and heated to 50°C. A 500 mg sample of ACTIVA® RMtransglutaminase (Ajinomoto Co., Inc.) (diluted with 2 ml of DI water) was added to the suspension and stirred for 15 minutes at 50°C. To this suspension, 60 grams of starch (Sta-lok® 300) was added followed by 2.5 grams of dry PVOH (Elvanol® 75-15, Kuraray America Inc.) and the temperature was raised to 95°C. This suspension was kept at 95°C for 20 minutes at which time 152 grams of a 13 % HercoBond® 2800 (Solenis, LLC) was added and stirred for 5 minutes. The resulting sample was cooled to 40°C and 1.2 grams of biocide RX9100 (Solenis, LLC) was added, mixed thoroughly and stored at room temperature.

The paper was made using a pilot papermaking machine as described above using 100% recycled fibers. The paper making slurry was treated with 1% dosage of protein formulation (12% - 14% total solids) as shown in Table 8. Treatment with three slightly different iterations of the enzyme protein formulation led to improvements in Mullen burst and ring crush strength properties. These results demonstrate that a pre-formulated high molecular weight protein based product can be used to increase dry strength of paper and paper based products. It is of note that, with the addition of a biocide, these formulations were stable for up to up to three months.

**Table 8**

| Sample | Description of Treatment | Dosage wt % based on dry fiber weight | Dry Mullen | Ring Crush |
|---|---|---|---|---|
| Control | No Treatment | 0 | 100 | 100 |
| Protein formulation -1 | protein formulation 1 | 1% | 111 | 109 |
| Protein formulation -2 | protein formulation 2 | 1% | 109 | 109 |
| Protein formulation -3 | protein formulation 3 | 1% | 116 | 113 |

**Claims**

1.  A method of making paper products with enhanced dry strength comprising:

    a) providing a pulp furnish or suspension of bleached, unbleached, or recycled pulp fiber or a combination thereof;
    b) adding to the pulp furnish or suspension a transglutaminase enzyme: and
    c) dewatering and forming the pulp furnish into a paper product.

2.  The method of claim 1, wherein a protein is added to the pulp suspension prior to, simultaneously with or subsequent to the addition of the transglutaminase enzyme or the protein is mixed with the transglutaminase enzyme prior to addition to the pulp suspension.

3.  The method of claims 1 or 2, wherein the protein is derived from plant or animal sources, or derived from soy flour or milk.

4.  The method of claim 3 wherein the protein source is soy flour.

5.  The method of any one of claims 1-4, wherein the transglutaminase enzyme is added to the pulp suspension in an amount of from about 0.001% to about 5% based on weight of dry pulp, or from about 0.01% to about 2.5% by weight dry pulp; or from about 0.1% to about 2% by weight dry pulp or from about 0.5% to about 1% by weight of dry pulp.

6.  The method of any one of claims 1-5, wherein the transglutaminase enzyme is added in an amount ranging from about 0.0001% to about 5% by weight of the dry protein; or from about 0.001% to about 2.5% by weight of the dry protein; or from about 0.01% to about 2%; or from about 0.5% to about 1% by weight of dry protein.

7.  The method of any one of claims 1-6, wherein at least one other enzyme selected from the group consisting of hemicellulases, amylases, proteases, lipases, esterases, pectinases, lyases, pectate lyase, cellulase, oxidoreductases, laccases, glucose oxidases, and peroxidases is added to the pulp suspension.

8.  The method of any one of claims 1-7, further comprising one or more nonionic, cationic, anionic, or amphoteric polymers.

9. The method of claim 8, wherein the one or more nonionic, cationic, anionic, or amphoteric polymers are added to the pulp suspension prior to addition of the transglutaminase enzyme.

10. The method of claim 8 or 9, wherein the one or more nonionic, cationic, anionic, or amphoteric polymers are added to the pulp suspension after addition of transglutaminase enzyme.

11. The method of any one of claims 1-10, wherein the transglutaminase enzymes are used in combination with other classes of enzymes.

12. The method of claim 11, wherein the other classes of enzymes are selected from the group consisting of oxidoreductases [EC1], hydrolases [EC3], such as, cellulases, proteases ligases [EC6], and combinations thereof.

13. The method of claim 11, wherein the other classes of enzymes are wild type, mutant, produced recombinantly, and/or are obtained from naturally occurring sources.

14. The method of any one of claims 2-13, wherein the transglutaminase enzyme and protein are combined prior to addition to the papermaking process.

**Patentansprüche**

1. Verfahren zum Herstellen von Papierprodukten mit verbesserter Trockenstärke, das Folgendes umfasst:

   a) Bereitstellen eines Zellstoffeintrags oder einer -Suspension aus gebleichter, ungebleichter oder recycelter Zellstofffaser oder einer Kombination davon:
   b) Zugeben eines Transglutaminase-Enzyms zu dem Zellstoffeintrag oder der -Suspension: und
   c) Entwässern und Bilden des Zellstoffeintrags in ein Papierprodukt.

2. Verfahren nach Anspruch 1, wobei ein Protein zu der Zellstoffsuspension vor, gleichzeitig mit oder nach der Zugabe des Transglutaminase-Enzyms zugegeben wird, oder das Protein mit dem Transglutaminase-Enzym vor der Zugabe zu der Zellstoffsuspension gemischt wird.

3. Verfahren nach Anspruch 1 oder 2, wobei das Protein aus pflanzlichen oder tierischen Quellen oder aus Sojamehl oder -milch gewonnen wird.

4. Verfahren nach Anspruch 3, wobei die Proteinquelle Sojamehl ist.

5. Verfahren nach einem der Ansprüche 1-4, wobei das Transglutaminase-Enzym zu der Zellstoffsuspension in einer Menge von etwa 0,001 % bis etwa 5 % basierend auf dem Trockenzellstoffgewicht, oder von etwa 0,01 % bis etwa 2,5 Gew.-% Trockenzellstoff; oder von etwa 0,1 % bis etwa 2 Gew.-% Trockenzellstoff oder von etwa 0,5 % bis etwa 1 Gew.-% Trockenzellstoff zugegeben wird.

6. Verfahren nach einem der Ansprüche 1-5, wobei das Transglutaminase-Enzym in einer Menge von etwa 0,0001 Gew.-% bis etwa 5 Gew.-% des Trockenproteins; oder von etwa 0,001 Gew.-% bis etwa 2,5 Gew.-% des Trockenproteins; oder von etwa 0,01 % bis etwa 2 Gew.-%; oder von etwa 0,5 Gew.-% bis etwa 1 Gew.-% Trockenprotein zugegeben wird.

7. Verfahren nach einem der Ansprüche 1-6, wobei mindestens ein anderes Enzym, das aus der Gruppe ausgewählt wird, die aus Hemicellulasen, Amylasen, Proteasen, Lipasen, Esterasen, Pektinasen, Lyasen, Pektatlyase, Cellulase, Oxidoreduktasen, Laccasen, Glucoseoxidasen und Peroxidasen besteht, zu der Zellstoffsuspension zugegeben wird.

8. Verfahren nach einem der Ansprüche 1-7, das weiter eines oder mehrere von nichtionischen, kationischen, anionischen oder amphoteren Polymeren umfasst.

9. Verfahren nach Anspruch 8, wobei das eine oder die mehreren nichtionischen, kationischen, anionischen oder amphoteren Polymere der Zellstoffsuspension vor der Zugabe des Transglutaminase-Enzyms zugegeben werden.

10. Verfahren nach Anspruch 8 oder 9, wobei das eine oder die mehreren nichtionischen, kationischen, anionischen oder amphoteren Polymere der Zellstoffsuspension nach der Zugabe von Transglutaminase-Enzym zugegeben werden.

11. Verfahren nach einem der Ansprüche 1-10, wobei die Transglutaminase-Enzyme in Kombination mit anderen Enzymklassen verwendet werden.

12. Verfahren nach Anspruch 11, wobei die anderen Enzymklassen aus der Gruppe ausgewählt sind, die aus Oxidoreduktasen [EC1], Hydrolasen [EC3], wie Cellulasen, Proteasen, Ligasen [EC6] und Kombinationen davon besteht.

13. Verfahren nach Anspruch 11, wobei die anderen Enzymklassen Wildtypen, Mutanten sind, rekombinant hergestellt und/oder aus natürlich vorkommenden Quellen gewonnen werden.

14. Verfahren nach einem der Ansprüche 2-13, wobei das Transglutaminase-Enzym und Protein vor der Zugabe zu dem Papierherstellungsprozess kombiniert werden.

**Revendications**

1. Procédé de fabrication de produits en papier ayant une résistance à sec améliorée, comprenant les étapes de :

   a) fournir une pâte à papier ou une suspension de fibre de pâte blanchie, écrue ou recyclée ou une combinaison de celles-ci;
   b) ajouter à la pâte à papier ou à la suspension une enzyme transglutaminase: et
   c) déshydrater et transformer la pâte à papier en un produit de papier.

2. Procédé selon la revendication 1, dans lequel une protéine est ajoutée à la suspension de pâte avant, simultanément ou après l'addition de l'enzyme transglutaminase ou la protéine est mélangée à l'enzyme transglutaminase avant l'addition à la suspension de pâte.

3. Procédé selon la revendication 1 ou 2, dans lequel la protéine est dérivée de sources végétales ou animales, ou dérivée de farine de soja ou de lait.

4. Procédé selon la revendication 3, dans lequel la source de protéines est la farine de soja.

5. Procédé selon l'une quelconque des revendications 1 à 4, dans lequel l'enzyme transglutaminase est ajoutée à la suspension de pâte en une quantité d'environ 0,001 % à environ 5 % sur la base du poids de pâte sèche, ou d'environ 0,01 % à environ 2,5 % en poids de pâte sèche ; ou d'environ 0,1 % à environ 2 % en poids de pâte sèche ou d'environ 0,5 % à environ 1 % en poids de pâte sèche.

6. Procédé selon l'une quelconque des revendications 1 à 5, dans lequel l'enzyme transglutaminase est ajoutée en une quantité allant d'environ 0,0001 % à environ 5 % en poids de la protéine sèche ; ou d'environ 0,001 % à environ 2,5 % en poids de la protéine sèche ; ou d'environ 0,01 % à environ 2 % ; ou d'environ 0,5 % à environ 1 % en poids de protéine sèche.

7. Procédé selon l'une quelconque des revendications 1 à 6, dans lequel au moins une autre enzyme choisie dans le groupe constitué par les hémicellulases, les amylases, les protéases, les lipases, les estérases, les pectinases, les lyases de la pectate lyase, de la cellulase, des oxydoréductases, des laccases, des glucose oxydases et des peroxydases sont ajoutés à la suspension de pâte.

8. Procédé selon l'une quelconque des revendications 1 à 7, comprenant en outre un ou plusieurs polymères non ioniques, cationiques, anioniques ou amphotères.

9. Procédé selon la revendication 8, dans lequel le ou les polymères non ioniques, cationiques, anioniques ou amphotères sont ajoutés à la suspension de pâte avant l'addition de l'enzyme transglutaminase.

**10.** Procédé selon la revendication 8 ou 9, dans lequel le ou les polymères non ioniques, cationiques, anioniques ou amphotères sont ajoutés à la suspension de pâte après l'addition de l'enzyme transglutaminase.

**11.** Procédé selon l'une quelconque des revendications 1 à 10, dans lequel les enzymes transglutaminase sont utilisées en combinaison avec d'autres classes d'enzymes.

**12.** Procédé selon la revendication 11, dans lequel les autres classes d'enzymes sont choisies dans le groupe constitué par les oxydoréductases [EC1], les hydrolases [EC3], telles que les cellulases, les protéases ligases [EC6], et leurs combinaisons.

**13.** Procédé selon la revendication 11, dans lequel les autres classes d'enzymes sont de type sauvage, mutantes, produites par recombinaison et/ou sont obtenues à partir de sources naturelles.

**14.** Procédé selon l'une quelconque des revendications 2 à 13, dans lequel l'enzyme transglutaminase et la protéine sont combinées avant l'addition au processus de fabrication du papier.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4917904 A
- US 6472182 B
- US 6051033 A
- US 20040265951 A
- US 20040266690 A
- US 20020155524 A
- US 20140116635 A1
- US 2010267110 A
- US 2013146239 A
- US 8858759 B

**Non-patent literature cited in the description**

- **JIN.** *J. Ag. Food Chem.,* 2012, vol. 60, 9828-9833
- **FOLK, J.E. ; COLE, P.W.** *Biochim. Biophys. Acta,* 1966, vol. 122, 244